# EUROPÄISCHE PATENTSCHRIFT

(11) **EP 2 891 266 B1**
(45) Veröffentlichungstag und Bekanntmachung des Hinweises auf die Patenterteilung: **03.01.2018**
(21) Anmeldenummer: 13766921.4
(22) Anmeldetag: 16.09.2013
(51) Int. Cl.: H04L 29/06, H04L 9/08, H04L 9/06

(54) **VERFAHREN UND ANORDNUNG ZUR SICHEREN KOMMUNIKATION ZWISCHEN NETZWERKEINRICHTUNGEN IN EINEM KOMMUNIKATIONSNETZWERK**
METHOD AND ARRANGEMENT FOR SECURE COMMUNICATION BETWEEN NETWORK UNITS IN A COMMUNICATION NETWORK
PROCÉDÉ ET SYSTÈME DE COMMUNICATION SÛRE ENTRE DES DISPOSITIFS D'UN RÉSEAU DE COMMUNICATION

(30) Priorität: 16.11.2012 DE 102012220990
(43) Veröffentlichungstag der Anmeldung: 08.07.2015
(73) Patentinhaber: Siemens Aktiengesellschaft, 80333 München (DE)
(72) Erfinder: PYKA, Stefan, 85570 Markt Schwaben (DE); ZWANZGER, Johannes, 85579 Neubiberg (DE)
(86) Internationale Anmeldenummer: PCT/EP2013/069090
(87) Internationale Veröffentlichungsnummer: WO 2014/075830

(56) Entgegenhaltungen:
- EP-A1- 1 648 112
- US-A1- 2007 121 947
- Anonymous: "Secure cryptoprocessor", , 12. Februar 2012 (2012-02-12), XP055089636, Gefunden im Internet: URL:https://web.archive.org/web/2012021200 0721/http://en.wikipedia.org/wiki/Secure_c ryptoprocessor [gefunden am 2013-11-21]
- Brecht Wyseur: "WHITE-BOX CRYPTOGRAPHY: HIDING KEYS IN SOFTWARE", , 15. Februar 2012 (2012-02-15), XP055080943, Gefunden im Internet: URL:http://whiteboxcrypto.com/files/2012_m isc.pdf [gefunden am 2013-09-25]
- Anonymous: "IEEE 802.11i-2004", , 7. Mai 2012 (2012-05-07), XP055089706, Gefunden im Internet: URL:https://web.archive.org/web/2012050703 5907/http://en.wikipedia.org/wiki/IEEE_802 .11i-2004 [gefunden am 2013-11-22]

## Beschreibung

Die vorliegende Erfindung betrifft ein Verfahren und eine Anordnung zur sicheren Kommunikation zwischen Netzwerkeinrichtungen in einem Kommunikationsnetzwerk.

Häufig ist es wünschenswert, eine auf einer unsicheren Netzwerkeinrichtung, wie beispielsweise einer unsicheren Hardware-Plattform, auszuführende Software gegen Angriffe von außen abzusichern. Eine unsichere Hardware-Plattform, wie beispielsweise ein Universalrechner aus Standardkomponenten, weist keine Gegenmaßnahmen gegen derartige Angriffe von außen auf eine auf der Plattform laufende Software auf. Angriffe von außen zielen beispielsweise darauf ab, Informationen über die laufende Software zu gewinnen oder die Software zu manipulieren.

Um auf einer unsicheren Hardware-Plattform Maßnahmen zu implementieren, die bestimmte Sicherheitsanforderungen für die laufende Software erfüllen, gibt es unterschiedliche Ansätze.

Falls die betreffende Hardware-Plattform nicht erweitert oder geändert werden kann, müssen alle Maßnahmen zur Absicherung der Software durch einer Erweiterung der bestehenden Software erzielt werden. Bekannte Mittel sind beispielsweise die Technik der Obfuskation oder die sogenannte White-Box-Kryptographie, die es erlauben, die Funktionsweise und sowie die Dateninhalte einer auf der Hardware-Plattform laufenden Software vor einem Angreifer zu verbergen. Allerdings bergen diese Techniken die Gefahr, dass die Funktionsweise dennoch von einem Angreifer analysiert und gebrochen werden kann.

Falls die Hardware-Plattform erweitert oder geändert werden kann, bietet sich der Einsatz geeigneter sicherer Netzwerkeinrichtungen an, wie beispielsweise sichere Bausteine. Sichere Bausteine sind beispielsweise Secure-Memory-Bausteine, Trusted-Platform-Module (TPMs) oder SmartCard-Controller (auch Security-Controller). Mittels derartiger Bausteine ist es beispielsweise möglich, geheimes Datenmaterial sicher und nicht auslesbar zu speichern und kryptographische Algorithmen sicher, beispielsweise resistent gegen Seitenkanalangriffe, zu implementieren.

Die Verwendung sicherer Hardware-Bausteine bringt jedoch den Nachteil mit sich, dass durch zusätzlich notwendige Kommunikation zwischen der unsicheren Plattform und den sicheren Hardware-Bausteinen weitere Probleme entstehen können. Beispielsweise könnte ein Angreifer die Kommunikationsschnittstelle zwischen der unsicheren Plattform und einem sicheren Baustein abhören und den jeweiligen Datenverkehr analysieren. Eine vertrauliche und authentische Kommunikation zwischen einer unsicheren Hardware-Plattform und einem sicheren Baustein ist daher bisher nur schwer zu gewährleisten.

Die US-Patentanmeldung US2007/121947 offenbart Verfahren und Vorrichtungen zur Bereitstellung eines Schlüsselverwaltungssystems für drahtlose Kommunikationsnetzwerke.

Daher ist eine Aufgabe der vorliegenden Erfindung, eine verbesserte sichere Kommunikation zwischen Netzwerkeinrichtungen zu schaffen.

Demgemäß wird ein Verfahren zur sicheren Kommunikation zwischen einer ersten Netzwerkeinrichtung und einer zweiten Netzwerkeinrichtung in einem Kommunikationsnetzwerk vorgeschlagen. Die erste Netzwerkeinrichtung umfasst zumindest eine sichere Hardware-Komponente zum sicheren Speichern und sicheren Ausführen von Software. Die zweite Netzwerkeinrichtung umfasst zumindest eine sichere Software-Komponente zum sicheren Speichern und sicheren Ausführen von Software. Das Verfahren weist folgende Schritte auf:
a) Speichern eines ersten gemeinsamen Geheimnisses, eines ersten Algorithmus und eines zweiten Algorithmus auf der ersten Netzwerkeinrichtung unter Verwendung der sicheren Hardware-Komponente und auf der zweiten Netzwerkeinrichtung unter Verwendung der sicheren Software-Komponente;
b) Senden eines ersten Datums von der zweiten Netzwerkeinrichtung an die erste Netzwerkeinrichtung;
c) Ausführen des ersten Algorithmus auf der ersten Netzwerkeinrichtung unter Verwendung der sicheren Hardware-Komponente und auf der zweiten Netzwerkeinrichtung unter Verwendung der sicheren Software-Komponente zur jeweiligen Bereitstellung eines zweiten gemeinsamen Geheimnisses, wobei die Eingabe für den ersten Algorithmus jeweils durch das erste gemeinsame Geheimnis und das erste Datum gebildet wird;
d) Senden eines zweiten Datums von der ersten Netzwerkeinrichtung an die zweite Netzwerkeinrichtung;
e) Ausführen des zweiten Algorithmus auf der ersten Netzwerkeinrichtung unter Verwendung der sicheren Hardware-Komponente und auf der zweiten Netzwerkeinrichtung unter Verwendung der sicheren Software-Komponente zur jeweiligen Bereitstellung eines dritten gemeinsamen Geheimnisses, wobei die Eingabe für den zweiten Algorithmus jeweils durch das zweite gemeinsame Geheimnis und das zweite Datum gebildet wird; und
f) Verwenden des dritten gemeinsamen Geheimnisses durch die erste Netzwerkeinrichtung und die zweite Netzwerkeinrichtung für eine sichere Kommunikation zwischen der ersten Netzwerk-einrichtung und der zweiten Netzwerkeinrichtung.

Der Begriff Software umfasst hierbei ausführbare Programme und die zugehörigen Daten und bildet das Komplement zu dem Begriff Hardware, der die physischen Komponenten einer Netzwerkeinrichtung umfasst.

Das erste und das zweite Datum können jeweils im Klartext gesendet werden, das heißt ohne eine Verschlüsselung.

Das Verfahren erlaubt eine sichere und authentische Kommunikation zwischen zwei Netzwerkeinrichtungen wie beispielsweise einer unsicheren Hardware-Plattform und einem sicheren Baustein. Es ist dabei möglich, die verwendeten gemeinsamen Geheimnisse für jedes Paar von erster und zweiter Netzwerkeinrichtung unterschiedlich auszubilden, damit ein potentieller Angreifer die Ergebnisse einer Analyse bezüglich einer unsicheren Netzwerkeinrichtung nicht auf eine andere unsichere Netzwerkeinrichtung übertragen kann.

Das Verfahren ermöglicht es, den Kommunikationskanal zwischen einer unsicherer Plattform und einem Security-Controller gegen Angriffe auf die Vertraulichkeit und auf die Authentizität auf flexible Art zu schützen. Dies wird mit minimalem Aufwand und minimalen Kosten bewerkstelligt.

Bei Ausführungsformen des Verfahrens wird für eine Aktualisierung des dritten gemeinsamen Geheimnisses gemäß einer vorgebbaren Regel ein Wiederholen der Schritte d) und e) ausgeführt.

Auf diese Weise kann das dritte gemeinsame Geheimnis beispielsweise in regelmäßigen Abständen geändert werden, um einen potentiellen Angriff auf einen Kommunikationskanal zwischen der ersten und der zweiten Netzwerkeinrichtung zu erschweren.

Das zweite Datum wird dabei vorteilhaft für jede Wiederholung der Schritte d) und e) gewechselt.

Bei weiteren Ausführungsformen des Verfahrens verweigert die erste Netzwerkeinrichtung eine weitere Kommunikation mit der zweiten Netzwerkeinrichtung, wenn die gemäß der vorgebbaren Regel fällige Aktualisierung des dritten gemeinsamen Geheimnisses ausbleibt.

Dies stellt eine weitere Verbesserung der sicheren Kommunikation zwischen den Netzwerkeinrichtungen dar, da für den Fall eines erfolgreichen Angriffs ein möglicherweise korrumpiertes drittes gemeinsames Geheimnis durch die für eine weitere Kommunikation zwingend notwendige Aktualisierung für einen Angreifer nicht weiter verwendbar ist.

Bei weiteren Ausführungsformen umfasst die vorgebbare Regel einen Trigger, wobei der Trigger durch den Ablauf einer vorgebbaren Zeitspanne ausgelöst wird.

Bei weiteren Ausführungsformen umfasst die vorgebbare Regel einen Trigger, wobei der Trigger durch ein Erreichen eines vorgebbaren, zwischen der ersten Netzwerkeinrichtung und der zweiten Netzwerkeinrichtung ausgetauschten Datenvolumens ausgelöst wird.

Bei weiteren Ausführungsformen umfasst die vorgebbare Regel einen Trigger, wobei der Trigger nach jedem Verwenden des dritten gemeinsamen Geheimnisses durch die erste Netzwerkeinrichtung oder die zweite Netzwerkeinrichtung ausgelöst wird.

Das Aktualisieren des dritten gemeinsamen Geheimnisses nach jedem Verwenden ist beispielsweise bei semantisch sehr einfachen zu übertragenden Daten vorteilhaft, die nur wenige unterschiedliche Werte annehmen können, zum Beispiel "0/1" oder "Ja/Nein". Derartige Daten können von einem Angreifer leicht abgeleitet werden, wenn über einen längeren Zeitraum dasselbe dritte gemeinsame Geheimnis zur sicheren Kommunikation verwendet wird.

Wenn das dritte gemeinsame Geheimnis regelmäßig gewechselt wird, kann ein Angreifer die Kommunikation nur für einen kurzen Zeitraum analysieren und die Ergebnisse allenfalls nutzen, bis das dritte gemeinsame Geheimnis gewechselt wird.

Bei weiteren Ausführungsformen ist das erste Datum und/oder das zweite Datum eine Zufallszahl, ein Plattform-individuelles Datum oder eine Seriennummer.

Die Verwendung eines Plattform-individuellen Datums oder einer Seriennummer ermöglicht eine Plattform-individuelle Kommunikation, die es einem potentiellen Angreifer erschwert, aus der Analyse der Kommunikation einer Plattform Rückschlüsse auf andere Plattformen zu ziehen.

Bei weiteren Ausführungsformen wird das erste gemeinsame Geheimnis und/oder das zweite gemeinsame Geheimnis und/oder das dritte Geheimnis durch zwei Kommunikationsschlüssel gebildet, wobei die zwei Kommunikationsschlüssel einen Vertraulichkeitsschlüssel und einen Authentizitätsschlüssel umfassen.

Bei weiteren Ausführungsformen ist die zweite Netzwerkeinrichtung ein Universalrechner.

Ein Universalrechner ist beispielsweise ein Rechner oder Computer, der aus Standardkomponenten gebildet ist, die nicht notwendigerweise gesichert sein müssen.

Bei weiteren Ausführungsformen ist die sichere Hardware-Komponente durch einen vor einem nicht-autorisierten Zugriff geschützten Sicherheitsbaustein ausgebildet.

Ein Sicherheitsbaustein ist beispielsweise ein Trusted-Platform-Modul. Derartige Sicherheitsbausteine sind in großer Zahl am Markt verfügbar.

Bei weiteren Ausführungsformen wird die sichere Software-Komponente durch Code-Obfuskation, White-Box-Kryptographie und/oder Maßnahmen zum Schutz gegen Debugging-Angriffe ausgebildet.

Ein Schutz gegen Debugging-Angriffe dient dem Schutz vor Angriffen auf die Software und/oder die zugehörigen Daten zur Laufzeit mittels so genannter Debugger. Debugger sind Software-Werkzeuge, die einen Zugriff auf laufende Programme und ihre Daten im Speicher eines Rechners ermöglichen.

Bei weiteren Ausführungsformen ist die erste Netzwerkeinrichtung als Security-Controller ausgebildet, auch SmartCard-Controller genannt.

Bei weiteren Ausführungsformen ist der Security-Controller als passive Komponente ausgebildet.

Passiv bedeutet dabei, dass der Security-Controller nur auf Anfragen der unsicheren Plattform reagieren und das zweite Datum für ein Schlüsselupdate schicken kann.

Weiterhin wird eine Anordnung mit einer ersten Netzwerkeinrichtung und einer zweiten Netzwerkeinrichtung in einem Kommunikationsnetzwerk vorgeschlagen. Die erste Netzwerkeinrichtung umfasst zumindest eine sichere Hardware-Komponente zum sicheren Speichern und sicheren Ausführen von Software, und die zweite Netzwerkeinrichtung umfasst zumindest eine sichere Software-Komponente zum sicheren Speichern und sicheren Ausführen von Software. Die sichere Hardware-Komponente ist zum sicheren Speichern eines ersten gemeinsamen Geheimnisses, eines ersten Algorithmus und eines zweiten Algorithmus auf der ersten Netzwerkeinrichtung eingerichtet. Die sichere Software-Komponente ist zum sicheren Speichern des ersten gemeinsamen Geheimnisses, des ersten Algorithmus und des zweiten Algorithmus auf der zweiten Netzwerkeinrichtung eingerichtet. Die Anordnung weist weiterhin ein erstes Sendemittel auf, das zum Senden eines ersten Datums von der zweiten Netzwerkeinrichtung an die erste Netzwerkeinrichtung eingerichtet ist. Die sichere Hardware-Komponente ist zum sicheren Ausführen des ersten Algorithmus auf der ersten Netzwerkeinrichtung eingerichtet. Die sichere Software-Komponente ist zum sicheren Ausführen des ersten Algorithmus auf der zweiten Netzwerkeinrichtung eingerichtet. Beides dient zur jeweiligen Bereitstellung eines zweiten gemeinsamen Geheimnisses, wobei die Eingabe für den ersten Algorithmus jeweils durch das erste gemeinsame Geheimnis und das erste Datum gebildet ist. Die Anordnung weist weiterhin ein zweites Sendemittel auf, das zum Senden eines zweiten Datums von der ersten Netzwerkeinrichtung an die zweite Netzwerkeinrichtung eingerichtet ist. Weiterhin ist die sichere Hardware-Komponente zum sicheren Ausführen des zweiten Algorithmus auf der ersten Netzwerkeinrichtung eingerichtet. Die sichere Software-Komponente ist zum sicheren Ausführen des zweiten Algorithmus auf der zweiten Netzwerkeinrichtung eingerichtet. Beides dient zur jeweiligen Bereitstellung eines dritten gemeinsamen Geheimnisses, wobei die Eingabe für den zweiten Algorithmus jeweils durch das zweite gemeinsame Geheimnis und das zweite Datum gebildet ist. Weiterhin weist die Anordnung Kommunikationsmittel auf, die zum Verwenden des dritten gemeinsamen Geheimnisses durch die erste Netzwerkeinrichtung und die zweite Netzwerkeinrichtung für eine sichere Kommunikation zwischen der ersten Netzwerkeinrichtung und der zweiten Netzwerkeinrichtung eingerichtet sind.

Das kryptographische Mittel, das erste und das zweite Sendemittel und die Kommunikationsmittel können hardwaretechnisch und/oder auch softwaretechnisch implementiert sein. Bei einer hardwaretechnischen Implementierung kann das jeweilige Mittel als Vorrichtung oder als Teil einer Vorrichtung, zum Beispiel als Computer oder als Mikroprozessor ausgebildet sein. Bei einer softwaretechnischen Implementierung kann das jeweilige Mittel als Computerprogrammprodukt, als eine Funktion, als eine Routine, als Teil eines Programmcodes oder als ausführbares Objekt ausgebildet sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Dabei zeigen:
- Fig. 1: eine schematische Ansicht eines Ausführungsbeispiels einer Anordnung mit einer ersten Netzwerk-einrichtung und einer zweiten Netzwerkeinrichtung in einem Kommunikationsnetzwerk; und
- Fig. 2: ein schematisches Ablaufdiagramm eines Ausführungs-beispiels eines Verfahrens zur sicheren Kommunikation zwischen einer ersten Netzwerkeinrichtung und einer zweiten Netzwerkeinrichtung in einem Kommunikationsnetzwerk.

In den Figuren sind gleiche oder funktionsgleiche Elemente mit denselben Bezugszeichen versehen worden, sofern nichts anderes angegeben ist.

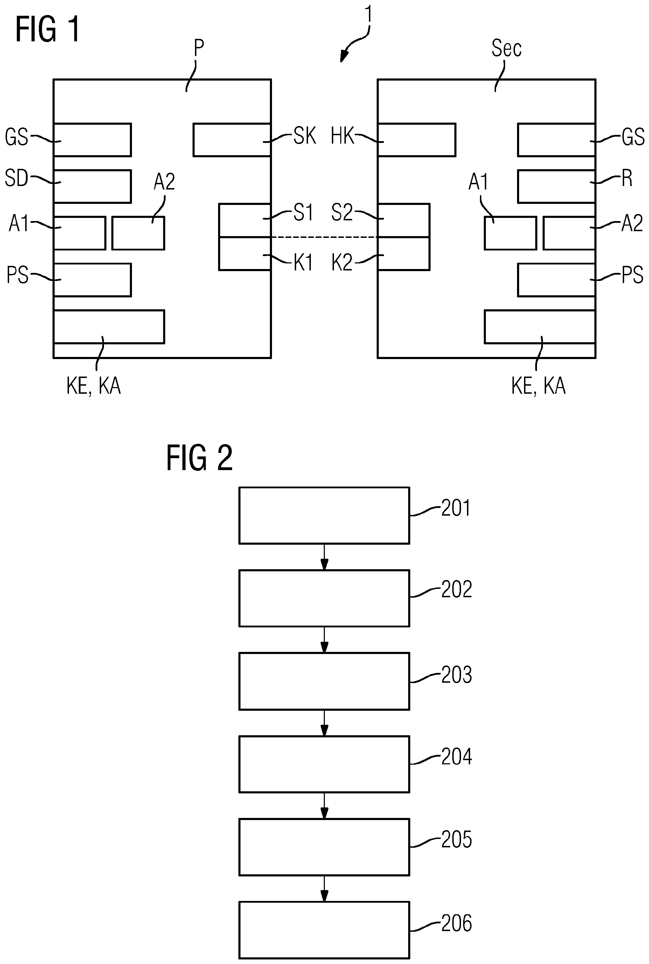

Fig. 1 zeigt eine schematische Ansicht eines ersten Ausführungsbeispiels einer Anordnung 1 mit einer ersten Netzwerk-einrichtung Sec und einer zweiten Netzwerkeinrichtung P in einem Kommunikationsnetzwerk. Zwischen der ersten Netzwerk-einrichtung Sec und der zweiten Netzwerkeinrichtung P besteht eine Kommunikationsverbindung, die in Fig. 1 durch eine gestrichelte Linie dargestellt ist. Weitere Komponenten des Kommunikationsnetzwerks sind der besseren Lesbarkeit halber in Fig. 1 nicht dargestellt.

Bei der zweiten Netzwerkeinrichtung P handelt es sich um einen Universalrechner aus Standardkomponenten und somit um eine ungesicherte oder unsichere Plattform, während es sich bei der ersten Netzwerkeinrichtung Sec um einen Security-Controller handelt, also um eine gesicherte oder sichere Plattform.

Der Security-Controller Sec umfasst eine sichere Hardware-Komponente HK zum sicheren Speichern und sicheren Ausführen von Software, und die unsichere Plattform P umfasst eine sichere Software-Komponente SK zum sicheren Speichern und sicheren Ausführen von Software. Durch die sichere Software-Komponente SK ist Software, das heißt ein Programm und seine Daten, auf der unsicheren Plattform in ausreichender Form gegen Debugging-Angriffe geschützt, wodurch ein schnelles Auslesen der im Weiteren verwendeten Kommunikationsschlüssel GS, PS und KE, KA auf der unsicheren Plattform für einen externen Angreifer nicht möglich ist.

Die sichere Hardware-Komponente HK ist zum sicheren Speichern eines ersten gemeinsamen Geheimnisses GS und zum sicheren Ausführen eines ersten Algorithmus A1 und eines zweiten Algorithmus A2 auf dem Security-Controller Sec eingerichtet. Die sichere Software-Komponente SK ist zum sicheren Speichern des ersten gemeinsamen Geheimnisses GS und zum sicheren Ausführen des ersten Algorithmus A1 und des zweiten Algorithmus A2 auf der unsicheren Plattform P eingerichtet.

Sowohl der Security-Controller Sec als auch die unsichere Plattform P umfassen somit entsprechende Mittel zum sicheren Speichern des ersten gemeinsamen Geheimnisses GS und zum sicheren Ausführen des ersten Algorithmus A1 und des zweiten Algorithmus A2. Dies dient zur jeweiligen Bereitstellung eines zweiten gemeinsamen Geheimnisses PS.

Die unsichere Plattform P umfasst weiterhin ein erstes Sendemittel S1 zum Senden eines ersten Datums SD, beispielsweise einer auf der unsicheren Plattform P gespeicherten Seriennummer oder einer Hardware-Adresse, an den Security-Controller Sec.

Der Security-Controller P umfasst ein zweites Sendemittel S2 zum Senden eines zweiten Datums R, beispielsweise einer Zufallszahl, an die unsichere Plattform P.

Weiterhin sind die sichere Hardware-Komponente HK und die sichere Software-Komponente SK zum sicheren Ausführen des zweiten Algorithmus A2 eingerichtet. Dies dient zur jeweiligen Bereitstellung eines dritten gemeinsamen Geheimnisses KE, KA.

Sowohl der Security-Controller Sec als auch die unsichere Plattform P umfassen ein Kommunikationsmittel K1, K2 zum Verwenden des dritten gemeinsamen Geheimnisses KE, KA für eine sichere Kommunikation miteinander.

Fig. 2 zeigt ein schematisches Ablaufdiagramm eines Ausführungsbeispiels eines Verfahrens zur sicheren Kommunikation zwischen dem Security-Controller Sec und der unsicheren Plattform P.

In einem ersten Schritt 201 erfolgt ein Speichern des ersten gemeinsamen Geheimnisses GS, des ersten Algorithmus A1 und des zweiten Algorithmus A2 auf dem Security-Controller unter Verwendung der sicheren Hardware-Komponente HK und auf der unsicheren Plattform P unter Verwendung der sicheren Software-Komponente SK.

Auf der unsicheren Plattform P und auf dem Security-Controller Sec wird somit ein gemeinsames Geheimnis GS abgelegt, das beispielsweise ein kryptographischer Schlüssel in Form zweier Kommunikationsschlüssel KE, KA sein kann. Dieses gemeinsame Geheimnis GS ist für alle Plattformen gleich. Auf dem Security-Controller Sec kann dieses Geheimnis GS nicht ausgelesen werden, da der Security-Controller Sec beispielsweise einen sicheren, nicht-auslesbaren Speicher umfasst. Auf der unsicheren Plattform P ist das gemeinsame Geheimnis GS durch geeignete Mittel geschützt, beispielsweise mithilfe von Code-Obfuskation oder durch White-Box-Kryptographie, das heißt durch die Integration des Geheimnisses GS in einen kryptographischen Algorithmus, der mittels White-Box-Techniken implementiert ist.

In einem zweiten Schritt 202 erfolgt ein Senden der Seriennummer SD von der unsicheren Plattform P an den Security-Controller Sec.

Der zweite Schritt 202 wird auch als initiales Pairing bezeichnet.

In einem dritten Schritt 203 erfolgt ein Ausführen des ersten Algorithmus A1 auf dem Security-Controller Sec unter Verwendung der sicheren Hardware-Komponente HK und auf der unsicheren Plattform P unter Verwendung der sicheren Software-Komponente SK zur jeweiligen Bereitstellung des zweiten gemeinsamen Geheimnisses PS, wobei die Eingabe für den ersten Algorithmus A1 jeweils durch das erste gemeinsame Geheimnis GS und die Seriennummer SD gebildet wird.

Es wird also mithilfe der Plattform-individuellen Seriennummer SD sowohl auf der unsicheren Plattform P als auch auf dem Security-Controller Sec jeweils mit dem gleichen Algorithmus A1 ein Plattform-individuelles Geheimnis PS abgeleitet. Das Datum SD, hier die Seriennummer, kann im Klartext an den Security-Controller Sec gesendet werden. Der Algorithmus A1 muss auf der unsicheren Plattform P beispielsweise durch Obfuskation oder White-Box-Kryptographie geschützt sein.

Der Security-Controller Sec fordert in regelmäßigen Abständen ein Schlüsselupdate der Kommunikationsschlüssel KE, KA ein. Dazu erfolgt in einem vierten Schritt 204 ein Senden der Zufallszahl R vom Security-Controller Sec an die unsichere Plattform P.

In einem fünften Schritt 205 erfolgt ein Ausführen des zweiten Algorithmus A2 auf dem Security-Controller Sec unter Verwendung der sicheren Hardware-Komponente HK und auf der unsicheren Plattform P unter Verwendung der sicheren Software-Komponente SK zur jeweiligen Bereitstellung des dritten gemeinsamen Geheimnisses KE, KA, wobei die Eingabe für den zweiten Algorithmus A2 jeweils durch das zweite gemeinsame Geheimnis PS und das zweite Datum R gebildet wird.

Auf diese Weise werden aus der Zufallszahl R und dem Plattform-individuellen Schlüssel PS neue Kommunikationsschlüssel KE, KA berechnet, die einen Vertraulichkeitsschlüssel KE und einen Authentizitätsschlüssel KA umfassen. Die Zufallszahl R kann wiederum im Klartext an die unsichere Plattform P gesendet werden. Der Algorithmus A2 muss auf der unsicheren Plattform P wiederum durch Code-Obfuskation oder White-Box-Kryptographie geschützt werden.

Der vierte Schritt 204 und der fünfte Schritt 205 stellen ein Geheimnis-Update oder Schlüssel-Update der KommunikationsSchlüssel dar. Das Geheimnis-Update wird vorzugsweise in regelmäßigen Abständen ausgeführt, um einen Angriff durch einen externen Angreifer zu erschweren.

Die unsichere Plattform P soll gezwungen sein, in regelmäßigen Abständen ein Schlüssel-Update durchzuführen. Vom Security-Controller P kann dieser Prozess nicht angestoßen werden, wenn
es sich um einen rein passiven Baustein handelt. Es werden daher Regeln definiert, die für beide Seiten, also für den Security-Controller Sec und die unsichere Plattform P, eindeutig klären, wann ein solches Schlüssel-Update zu erfolgen hat. Dies kann beispielsweise nach Erreichen einer bestimmten, zwischen dem Security-Controller Sec und der unsicheren Plattform P übertragenen Datenmenge oder nach Ablauf einer vorgebbaren Zeitspanne der Fall sein.

Bei Ausbleiben eines gemäß einer Regel fälligen Schlüssel-Updates verweigert der Security-Controller Sec jede weitere Kommunikation mit der unsicheren Plattform P.

In einem sechsten Schritt 206 erfolgt ein Verwenden des dritten gemeinsamen Geheimnisses KE, KA durch den Security-Controller Sec und die unsichere Plattform P für eine sichere Kommunikation miteinander. Der sechste Schritt 206 umfasst dabei beliebig viele Kommunikationsvorgänge zwischen dem Security-Controller Sec und der unsicheren Plattform P, wobei wie oben dargestellt in regelmäßigen Abständen ein Schlüssel-Update gemäß der Schritte 204 und 205 vorgenommen wird, um die Sicherheit des Verfahrens weiter zu erhöhen.

Schritt 202 wird verwendet, um eine Plattform-individuelle Kommunikation zu ermöglichen. Diese Maßnahme erschwert es Angreifern, aus der Analyse der Kommunikation einer Plattform Rückschlüsse auf andere Plattformen zu ziehen.

Die Schritte 204 und 205, also das regelmäßige Schlüssel-Update, werden eingesetzt, um einem Angreifer die Analyse der Kommunikation zu erschweren. Da die Kommunikationsschlüssel regelmäßig gewechselt werden, kann ein Angreifer die Kommunikation nur für einen kurzen Zeitraum analysieren und die Ergebnisse allenfalls nutzen, bis die Schlüssel gewechselt werden.

Schritt 202 kann nicht dadurch ersetzt werden, dass vom Security-Controller Sec eine Zufallszahl R2 an die unsichere Plattform P gesendet wird. Einem Angreifer wäre es dann möglich, auf einer Plattform diese Zufallszahl zu beobachten und auf weiteren (unsicheren) Plattformen im Zuge des Pairing-Prozesses einzuspielen. Der Security-Controller Sec, von dem die Zufallszahl R2 gesendet wurde, könnte dann als Server für unterschiedliche unsichere Plattformen verwendet werden, da dann alle Plattformen denselben Plattform-individuellen Schlüssel PS kennen würden.

Im Folgenden ist ein Beispiel für die Wahl der Algorithmen A1 und A2 dargestellt.

Das gemeinsame Geheimnis GS und das gemeinsame Geheimnis PS werden auf der unsicheren Plattform P durch eine per White-Box-Kryptographie geschützte symmetrische Blockchiffre E gespeichert. Die per White-Box-Kryptographie geschützte symmetrische Blockchiffre E stellt somit die sichere Software-Komponente SK auf der unsicheren Plattform P dar.

Die einzelnen Schritte für die Algorithmen A1 und A2, inklusive der Schlüsselablage oder Schlüsselspeicherung auf der unsicheren Plattform P und dem Security-Controller Sec, sind wie folgt:
1. GS muss auf geeignete Art und Weise durch eine irreversible Transformation T geschützt werden. Daher ist GS ist auf der unsicheren Plattform P in Form von T(GS) abgelegt.
2. Die symmetrische Blockchiffre E invertiert die Transformation T, beispielsweise per White-Box-Implementierung, auf dem Schlüssel GS, danach erfolgt die eigentliche Schlüsselableitung, und das Ergebnis wird wiederum nach einer Transformation mit T abgelegt:
   Ableitung von PS erfolgt mittels PS = E(T⁻¹(GS), SD). Auf der unsicheren Plattform P wird T(PS) abgelegt.
3. Um die Kommunikationsschlüssel KA und KE zu erzeugen, generiert der Security-Controller Sec zwei Zufallszahlen R1 und R2. Diese werden wieder mithilfe des symmetrischen Algorithmus A2 verschlüsselt, und die Chiffretexte werden als die zwei Kommunikationsschlüssel KE, KA verwendet:
   Ableitung von KE erfolgt mittels KE = E(T⁻¹(PS), R1).
   Ableitung von KA erfolgt mittels KA = E(T⁻¹(PS), R2).

Ein Angreifer kann nun das gemeinsame Geheimnis GS nicht erfolgreich angreifen, da dieses auf der unsicheren Plattform P durch die Transformation T und auf dem Security-Controller Sec durch den sicheren Speicher geschützt ist.

Ein Angreifer kann weiterhin den Algorithmus A1 nicht erfolgreich angreifen, da dieser durch die White-Box-Methoden auf der unsicheren Plattform P und durch den sicheren Speicher auf dem Security-Controller Sec geschützt ist.

Ein Angreifer kann auch das gemeinsame Geheimnis PS nicht erfolgreich angreifen, da dieses auf der unsicheren Plattform P durch die Transformation T und auf dem Security-Controller Sec durch den sicheren Speicher geschützt ist.

Auch den Algorithmus A2 kann ein Angreifer nicht erfolgreich angreifen, da dieser durch die White-Box-Methoden auf der unsicheren Plattform P und durch den sicheren Speicher auf dem Security-Controller Sec geschützt ist.

Weiterhin kann ein Angreifer die Kommunikationsschlüssel KE und KA nicht erfolgreich angreifen, da diese wie oben dargestellt aufgrund des regelmäßigen Schlüssel-Updates kurzlebig sind und die unsichere Plattform P ausreichend mit Anti-Debugging-Maßnahmen geschützt ist, um eine schnelle Extraktion der Kommunikationsschlüssel KE, KA aus dem Speicher der unsicheren Plattform P zu verhindern. Auf dem Security-Controller Sec sind die Kommunikationsschlüssel KE, KA durch den sicheren Speicher geschützt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden. Der Schutzumfang der Erfindung ist durch die Ansprüche definiert.

## Patentansprüche

1. Verfahren zur sicheren Kommunikation zwischen einer ersten Netzwerkeinrichtung (Sec) und einer zweiten Netzwerkeinrichtung (P) in einem Kommunikationsnetzwerk, wobei die erste Netzwerkeinrichtung (Sec) zumindest eine sichere Hardware-Komponente (HK) zum sicheren Speichern und sicheren Ausführen von Software umfasst, und wobei die zweite Netzwerkeinrichtung (P) zumindest eine sichere Software-Komponente (SK) zum sicheren Speichern und sicheren Ausführen von Software umfasst,
mit den Schritten:
a) Speichern eines ersten gemeinsamen Geheimnisses (GS), eines ersten Algorithmus (A1) und eines zweiten Algorithmus (A2) auf der ersten Netzwerkeinrichtung (Sec) unter Verwendung der sicheren Hardware-Komponente (HK) und auf der zweiten Netzwerkeinrichtung (P) unter Verwendung der sicheren Software-Komponente (SK);
b) Senden eines ersten Datums (SD) von der zweiten Netzwerk-einrichtung (P) an die erste Netzwerkeinrichtung (Sec);
c) Ausführen des ersten Algorithmus (A1) auf der ersten Netzwerkeinrichtung (Sec) unter Verwendung der sicheren Hardware-Komponente (HK) und auf der zweiten Netzwerkeinrichtung (P) unter Verwendung der sicheren Software-Komponente (SK) zur jeweiligen Bereitstellung eines zweiten gemeinsamen Geheimnisses (PS), wobei die Eingabe für den ersten Algorithmus (A1) jeweils durch das erste gemeinsame Geheimnis (GS) und das erste Datum (SD) gebildet wird;
d) Senden eines zweiten Datums (R) von der ersten Netzwerk-einrichtung (Sec) an die zweite Netzwerkeinrichtung (P);
e) Ausführen des zweiten Algorithmus (A2) auf der ersten Netzwerkeinrichtung (Sec) unter Verwendung der sicheren Hardware-Komponente (HK) und auf der zweiten Netzwerkeinrichtung (P) unter Verwendung der sicheren Software-Komponente (SK) zur jeweiligen Bereitstellung eines dritten gemeinsamen Geheimnisses (KE, KA), wobei die Eingabe für den zweiten Algorithmus (A2) jeweils durch das zweite gemeinsame Geheimnis (PS) und das zweite Datum (R) gebildet wird; und
f) Verwenden des dritten gemeinsamen Geheimnisses (KE, KA) durch die erste Netzwerkeinrichtung (Sec) und die zweite Netzwerkeinrichtung (P) für eine sichere Kommunikation zwischen der ersten Netzwerkeinrichtung (Sec) und der zweiten Netzwerkeinrichtung (P).

2. Verfahren nach Anspruch 1,
**dadurch gekennzeichnet,**
**dass** für eine Aktualisierung des dritten gemeinsamen Geheimnisses (KE, KA) gemäß einer vorgebbaren Regel ein Wiederholen der Schritte d) und e) ausgeführt wird.

3. Verfahren nach Anspruch 2,
**dadurch gekennzeichnet,**
**dass** die erste Netzwerkeinrichtung (Sec) eine weitere Kommunikation mit der zweiten Netzwerkeinrichtung (P) verweigert, wenn die gemäß der vorgebbaren Regel fällige Aktualisierung des dritten gemeinsamen Geheimnisses (KE, KA) ausbleibt.

4. Verfahren nach Anspruch 2 oder 3,
**dadurch gekennzeichnet,**
**dass** die vorgebbare Regel einen Trigger umfasst, wobei der Trigger durch Ablauf einer vorgebbaren Zeitspanne ausgelöst wird.

5. Verfahren nach Anspruch 2 oder 3,
**dadurch gekennzeichnet,**
**dass** die vorgebbare Regel einen Trigger umfasst, wobei der Trigger durch ein Erreichen eines vorgebbaren, zwischen der ersten Netzwerkeinrichtung (Sec) und der zweiten Netzwerkeinrichtung (P) ausgetauschten Datenvolumens ausgelöst wird.

6. Verfahren nach Anspruch 2 oder 3,
**dadurch gekennzeichnet,**
**dass** die vorgebbare Regel einen Trigger umfasst, wobei der Trigger nach jedem Verwenden des dritten gemeinsamen Geheimnisses (KE, KA) durch die erste Netzwerkeinrichtung (Sec) oder die zweite Netzwerkeinrichtung (P) ausgelöst wird.

7. Verfahren nach einem der vorstehenden Ansprüche,
**dadurch gekennzeichnet,**
**dass** das erste Datum (SD) und/oder das zweite Datum (R) eine Zufallszahl, ein Plattform-individuelles Datum oder eine Seriennummer ist.

8. Verfahren nach einem der vorstehenden Ansprüche,
**dadurch gekennzeichnet,**
**dass** das erste gemeinsame Geheimnis (GS) und/oder das zweite gemeinsame Geheimnis (PS) und/oder das dritte Geheimnis (KE, KA) durch zwei Kommunikationsschlüssel (KE, KA) gebildet wird, wobei die zwei Kommunikationsschlüssel (KE, KA) einen Vertraulichkeitsschlüssel (KE) und einen Authentizitätsschlüssel (KA) umfassen.

9. Verfahren nach einem der vorstehenden Ansprüche,
**dadurch gekennzeichnet,**
**dass** die zweite Netzwerkeinrichtung (P) ein Universalrechner ist.

10. Verfahren nach einem der vorstehenden Ansprüche,
**dadurch gekennzeichnet,**
**dass** die sichere Hardware-Komponente (HK) durch einen vor einem nicht-autorisierten Zugriff geschützten Sicherheitsbaustein ausgebildet wird.

11. Verfahren nach einem der vorstehenden Ansprüche,
**dadurch gekennzeichnet,**
**dass** die sichere Software-Komponente (SK) durch Code-Obfuskation, White-Box-Kryptographie und/oder Maßnahmen zum Schutz gegen Debugging-Angriffe ausgebildet wird.

12. Verfahren nach einem der vorstehenden Ansprüche,
**dadurch gekennzeichnet,**
**dass** die erste Netzwerkeinrichtung (Sec) als SmartCard-Controller ausgebildet wird.

13. Verfahren nach Anspruch 12,
**dadurch gekennzeichnet,**
**dass** der SmartCard-Controller (Sec) als passive Komponente ausgebildet wird.

14. Anordnung (1) mit einer ersten Netzwerkeinrichtung (Sec) und einer zweiten Netzwerkeinrichtung (P) in einem Kommunikationsnetzwerk, wobei die erste Netzwerkeinrichtung (Sec) zumindest eine sichere Hardware-Komponente (HK) zum sicheren Speichern und sicheren Ausführen von Software umfasst, und wobei die zweite Netzwerkeinrichtung (P) zumindest eine sichere Software-Komponente (SK) zum sicheren Speichern und sicheren Ausführen von Software umfasst, wobei:
a) die sichere Hardware-Komponente (HK) zum sicheren Speichern eines ersten gemeinsamen Geheimnisses (GS), eines ersten Algorithmus (A1) und eines zweiten Algorithmus (A2) auf der ersten Netzwerkeinrichtung (Sec) eingerichtet ist und die sichere Software-Komponente (SK) zum sicheren Speichern des ersten gemeinsamen Geheimnisses (GS), des ersten Algorithmus (A1) und des zweiten Algorithmus (A2) auf der zweiten Netzwerkeinrichtung (P) eingerichtet ist;
b) ein erstes Sendemittel (S1) zum Senden eines ersten Datums (SD) von der zweiten Netzwerkeinrichtung (P) an die erste Netzwerkeinrichtung (Sec) eingerichtet ist;
c) die sichere Hardware-Komponente (HK) zum sicheren Ausführen des ersten Algorithmus (A1) auf der ersten Netzwerkeinrichtung (Sec) und die sichere Software-Komponente (SK) zum sicheren Ausführen des ersten Algorithmus (A1) auf der zweiten Netzwerkeinrichtung (P) zur jeweiligen Bereitstellung eines zweiten gemeinsamen Geheimnisses (PS) eingerichtet sind, wobei die Eingabe für den ersten Algorithmus (A1) jeweils durch das erste gemeinsame Geheimnis (GS) und das erste Datum (SD) gebildet ist;
d) ein zweites Sendemittel (S2) zum Senden eines zweiten Datums (R) von der ersten Netzwerkeinrichtung (Sec) an die zweite Netzwerkeinrichtung (P) eingerichtet ist;
e) die sichere Hardware-Komponente (HK) zum sicheren Ausführen des zweiten Algorithmus (A2) auf der ersten Netzwerkeinrichtung (Sec) und die sichere Software-Komponente (SK) zum sicheren Ausführen des zweiten Algorithmus (A2) auf der zweiten Netzwerkeinrichtung (P) zur jeweiligen Bereitstellung eines dritten gemeinsamen Geheimnisses (KE, KA) eingerichtet sind, wobei die Eingabe für den zweiten Algorithmus (A2) jeweils durch das zweite gemeinsame Geheimnis (PS) und das zweite Datum (R) gebildet ist; und
f) Kommunikationsmittel (K1, K2) zum Verwenden des dritten gemeinsamen Geheimnisses (KE, KA) durch die erste Netzwerkeinrichtung (Sec) und die zweite Netzwerkeinrichtung (P) für eine sichere Kommunikation zwischen der ersten Netzwerkeinrichtung (Sec) und der zweiten Netzwerkeinrichtung (P) eingerichtet sind.

## Claims

1. Method for secure communication between a first network unit (Sec) and a second network unit (P) in a communication network, wherein the first network unit (Sec) comprises at least one secure hardware component (HK) for the secure storage and secure running of software, and wherein the second network unit (P) comprises at least one secure software component (SK) for the secure storage and secure running of software,
with the steps:
a) storage of a first common secret (GS), a first algorithm (A1) and a second algorithm (A2) on the first network unit (Sec) using the secure hardware component (HK) and on the second network unit (P) using the secure software component (SK) ;
b) transmission of a first datum (SD) from the second network unit (P) to the first network unit (Sec);
c) running of the first algorithm (A1) on the first network unit (Sec) using the secure hardware component (HK) and on the second network unit (P) using the secure software component (SK) for the respective provision of a second common secret (PS), wherein the input for the first algorithm (A1) is formed in each case by the first common secret (GS) and the first datum (SD);
d) transmission of a second datum (R) from the first network unit (Sec) to the second network unit (P);
e) running of the second algorithm (A2) on the first network unit (Sec) using the secure hardware component (HK) and on the second network unit (P) using the secure software component (SK) for the respective provision of a third common secret (KE, KA), wherein the input for the second algorithm (A2) is formed in each case by the second common secret (PS) and the second datum (R); and
f) use of the third common secret (KE, KA) by the first network unit (Sec) and the second network unit (P) for a secure communication between the first network unit (Sec) and the second network unit (P).

2. Method according to Claim 1,
**characterized in that**
a repetition of steps d) and e) is carried out for an update of the third common secret (KE, KA) according to a predefinable rule.

3. Method according to Claim 2,
**characterized in that**
the first network unit (Sec) refuses a further communication with the second network unit (P) if the updating of the third common secret (KE, KA) due according to the predefinable rule does not take place.

4. Method according to Claim 2 or 3,
**characterized in that**
the predefinable rule comprises a trigger, wherein the trigger is activated by the expiry of a predefinable time period.

5. Method according to Claim 2 or 3,
**characterized in that**
the predefinable rule comprises a trigger, wherein the trigger is activated by a reaching of a predefinable data volume exchanged between the first network unit (Sec) and the second network unit (P).

6. Method according to Claim 2 or 3,
**characterized in that**
the predefinable rule comprises a trigger, wherein the trigger is activated after each use of the third common secret (KA, KE) by the first network unit (Sec) or the second network unit (P).

7. Method according to one of the preceding claims,
**characterized in that**
the first datum (SD) and/or the second datum (R) is a random number, a platform-individual datum or a serial number.

8. Method according to one of the preceding claims,
**characterized in that**
the first common secret (GS) and/or the second common secret (PS) and/or the third common secret (KE, KA) are formed by two communication keys (KE, KA), wherein the two communication keys (KE, KA) comprise a confidentiality key (KE) and an authenticity key (KA) .

9. Method according to one of the preceding claims,
**characterized in that**
the second network unit (P) is a universal computer.

10. Method according to one of the preceding claims,
**characterized in that**
the secure hardware component (HK) is formed by a security module protected against unauthorized access.

11. Method according to one of the preceding claims,
**characterized in that**
the secure software component (SK) is formed by code obfuscation, white-box cryptography and/or measures to protect against debugging attacks.

12. Method according to one of the preceding claims,
**characterized in that**
the first network unit (Sec) is designed as a smartcard controller.

13. Method according to Claim 12,
**characterized in that**
the smartcard controller (Sec) is designed as a passive component.

14. Arrangement (1) with a first network unit (Sec) and a second network unit (P) in a communication network, wherein the first network unit (Sec) comprises at least one secure hardware component (HK) for the secure storage and secure running of software, and wherein the second network unit (P) comprises at least one secure software component (SK) for the secure storage and secure running of software,
wherein
a) the secure hardware component (HK) is configured for the secure storage of a first common secret (GS), a first algorithm (A1) and a second algorithm (A2) on the first network unit (Sec) and the secure software component (SK) is configured for the secure storage of the first common secret (GS), the first algorithm (A1) and the second algorithm (A2) on the second network unit (P);
b) a first transmit means (S1) is configured for the transmission of a first datum (SD) from the second network unit (P) to the first network unit (Sec);
c) the secure hardware component (HK) is configured for the secure running of the first algorithm (A1) on the first network unit (Sec) and the secure software component (SK) is configured for the secure running of the first algorithm (A1) on the second network unit (P) for the respective provision of a second common secret (PS), wherein the input for the first algorithm (A1) is formed in each case by the first common secret (GS) and the first datum (SD);
d) a second transmit means (S2) is configured for the transmission of a second datum (R) from the first network unit (Sec) to the second network unit (P);
e) the secure hardware component is configured for the secure running of the second algorithm (A2) on the first network unit (Sec) and the secure software component (SK) is configured for the secure running of the second algorithm (A2) on the second network unit (P) for the respective provision of a third common secret (KE, KA), wherein the input for the second algorithm (A2) is formed in each case by the second common secret (PS) and the second datum (R);
f) communication means (K1, K2) are configured for the use of the third common secret (KE, KA) by the first network unit (Sec) and the second network unit (P) for a secure communication between the first network unit (Sec) and the second network unit (P).

## Revendications

1. Procédé de communication sûre entre un premier dispositif de réseau (Sec) et un deuxième dispositif de réseau (P) dans un réseau de communication, le premier dispositif de réseau (Sec) comprenant au moins un composant hardware sûr (HK) pour le stockage et l'exécution sûrs de logiciels, et le deuxième dispositif de réseau (P) comprenant au moins un composant logiciel sûr (SK) pour le stockage et l'exécution sûrs de logiciels,
comportant les étapes suivantes :
a) sauvegarde d'un premier secret commun (GS), d'un premier algorithme (A1) et d'un deuxième algorithme (A2) sur le premier dispositif de réseau (Sec) avec utilisation du composant hardware sûr (HK) et sur le deuxième dispositif de réseau (P) avec utilisation du composant logiciel sûr (SK) ;
b) envoi d'une première donnée (SD) du deuxième dispositif de réseau (P) au premier dispositif de réseau (Sec) ;
c) exécution du premier algorithme (A1) sur le premier dispositif de réseau (Sec) avec utilisation du composant hardware sûr (HK) et sur le deuxième dispositif de réseau (P) avec utilisation du composant logiciel sûr (SK) pour la fourniture respective d'un deuxième secret commun (PS), l'entrée pour le premier algorithme (A1) étant formée respectivement par le premier secret commun (GS) et la première donnée (SD) ;
d) envoi d'une deuxième donnée (R) du premier dispositif de réseau (Sec) au deuxième dispositif de réseau (P) ;
e) exécution du deuxième algorithme (A2) sur le premier dispositif de réseau (Sec) avec utilisation du composant hardware sûr (HK) et sur le deuxième dispositif de réseau (P) avec utilisation du composant logiciel sûr (SK) pour la fourniture respective d'un troisième secret commun (KE, KA), l'entrée pour le deuxième algorithme (A2) étant formée respectivement par le deuxième secret commun (PS) et la deuxième donnée (R) ; et
f) utilisation du troisième secret commun (KE, KA) par le premier dispositif de réseau (Sec) et le deuxième dispositif de réseau (P) pour une communication sûre entre le premier dispositif de réseau (Sec) et le deuxième dispositif de réseau (P).

2. Procédé selon la revendication 1, **caractérisé en ce qu'**une répétition des étapes d) et e) est effectuée pour une mise à jour du troisième secret commun (KE, KA) selon une règle prédéterminable.

3. Procédé selon la revendication 2, **caractérisé en ce que** le premier dispositif de réseau (Sec) refuse une communication supplémentaire avec le deuxième dispositif de réseau (P) si la mise à jour du troisième secret commun (KE, KA) échue selon la règle prédéterminable n'a pas lieu.

4. Procédé selon la revendication 2 ou 3, **caractérisé en ce que** la règle prédéterminable comprend un déclencheur, le déclencheur étant déclenché par l'expiration d'un laps de temps prédéterminable.

5. Procédé selon la revendication 2 ou 3, **caractérisé en ce que** la règle prédéterminable comprend un déclencheur, le déclencheur étant déclenché par l'obtention d'un volume de données prédéterminable échangé entre le premier dispositif de réseau (Sec) et le deuxième dispositif de réseau (P).

6. Procédé selon la revendication 2 ou 3, **caractérisé en ce que** la règle prédéterminable comprend un déclencheur, le déclencheur étant déclenché après chaque utilisation du troisième secret commun (KE, KA) par le premier dispositif de réseau (Sec) ou le deuxième dispositif de réseau (P).

7. Procédé selon l'une des revendications précédentes, **caractérisé en ce que** la première donnée (SD) et/ou la deuxième donnée (R) sont un nombre aléatoire, une donnée individuelle pour une plateforme ou un numéro de série.

8. Procédé selon l'une des revendications précédentes, **caractérisé en ce que** le premier secret commun (GS) et/ou le deuxième secret commun (PS) et/ou le troisième secret (KE, KA) sont formés par deux clés de communication (KE, KA), les deux clés de communication (KE, KA) comprenant une clé de confidentialité (KE) et une clé d'authenticité (KA).

9. Procédé selon l'une des revendications précédentes, **caractérisé en ce que** le deuxième dispositif de réseau (P) est un ordinateur universel.

10. Procédé selon l'une des revendications précédentes, **caractérisé en ce que** le composant hardware sûr (HK) est constitué par un composant de sécurité protégé contre un accès non autorisé.

11. Procédé selon l'une des revendications précédentes, **caractérisé en ce que** le composant logiciel sûr (SK) est constitué par obfuscation de code, cryptographie en boîte blanche et/ou des mesures de protection contre des attaques de débugage.

12. Procédé selon l'une des revendications précédentes, **caractérisé en ce que** le premier dispositif de réseau (Sec) est réalisé en tant que contrôleur de carte intelligente.

13. Procédé selon la revendication 12, **caractérisé en ce que** le contrôleur de carte intelligente (Sec) est réalisé en tant que composant passif.

14. Système (1) comprenant un premier dispositif de réseau (Sec) et un deuxième dispositif de réseau (P) dans un réseau de communication, le premier dispositif de réseau (Sec) comprenant au moins un composant hardware sûr (HK) pour le stockage et l'exécution sûrs de logiciels, et le deuxième dispositif de réseau (P) comprenant au moins un composant logiciel sûr (SK) pour le stockage et l'exécution sûrs de logiciels,
a) le composant hardware sûr (HK) étant configuré pour la sauvegarde sûre d'un premier secret commun (GS), d'un premier algorithme (A1) et d'un deuxième algorithme (A2) sur le premier dispositif de réseau (Sec) et le composant logiciel sûr (SK) étant configuré pour la sauvegarde sûre du premier secret commun (GS), du premier algorithme (A1) et du deuxième algorithme (A2) sur le deuxième dispositif de réseau (P) ;
b) un premier moyen d'émission (S1) étant configuré pour envoyer une première donnée (SD) du deuxième dispositif de réseau (P) au premier dispositif de réseau (Sec) ;
c) le composant hardware sûr (HK) étant configuré pour l'exécution sûre du premier algorithme (A1) sur le premier dispositif de réseau (Sec) et le composant logiciel sûr (SK) étant configuré pour l'exécution sûre du premier algorithme (A1) sur le deuxième dispositif de réseau (P) pour fournir respectivement un deuxième secret commun (PS), l'entrée pour le premier algorithme (A1) étant formée respectivement par le premier secret commun (GS) et la première donnée (SD) ;
d) un deuxième moyen d'émission (S2) étant configuré pour envoyer une deuxième donnée (R) du premier dispositif de réseau (Sec) au deuxième dispositif de réseau (P) ;
e) le composant hardware sûr (HK) étant configuré pour l'exécution sûre du deuxième algorithme (A2) sur le premier dispositif de réseau (Sec) et le composant logiciel sûr (SK) étant configuré pour l'exécution sûre du deuxième algorithme (A2) sur le deuxième dispositif de réseau (P) pour fournir respectivement un troisième secret commun (KE, KA), l'entrée pour le deuxième algorithme (A2) étant formée respectivement par le deuxième secret commun (PS) et la deuxième donnée (R) ; et
des moyens de communication (K1, K2) étant configurés pour l'utilisation du troisième secret commun (KE, KA) par le premier dispositif de réseau (Sec) et le deuxième dispositif de réseau (P) pour une communication sûre entre le premier dispositif de réseau (Sec) et le deuxième dispositif de réseau (P).
